# EUROPÄISCHE PATENTSCHRIFT

(11) **EP 4 218 391 B1**
(45) Veröffentlichungstag und Bekanntmachung des Hinweises auf die Patenterteilung: **20.08.2025**
(21) Anmeldenummer: 22207235.7
(22) Anmeldetag: 14.11.2022
(51) Int. Cl.: A01D 41/02

(54) **LANDWIRTSCHAFTLICHE ARBEITSMASCHINE**
AGRICULTURAL MACHINE
MACHINE AGRICOLE

(30) Priorität: 27.01.2022 DE 102022101931
(43) Veröffentlichungstag der Anmeldung: 02.08.2023
(73) Patentinhaber: CLAAS Selbstfahrende Erntemaschinen GmbH, 33428 Harsewinkel (DE)
(72) Erfinder: Silies, Andreas, 48488 Emsbüren (DE); Rackow, Sascha, 33098 Paderborn (DE)
(74) Vertreter: CLAAS Gruppe

(56) Entgegenhaltungen:
- WO-A1-2010/069393
- WO-A1-2020/194877
- DE-A1- 102018 118 907
- JP-A- H1 017 274

## Beschreibung

Die vorliegende Erfindung betrifft eine landwirtschaftliche Arbeitsmaschine gemäß dem Oberbegriff des Anspruches 1.

Eine landwirtschaftliche Arbeitsmaschine gemäß dem Oberbegriff des Anspruches 1 in Gestalt eines Mähdreschers ist aus der EP 3 603 374 A1 bekannt. Der Mähdrescher umfasst ein zwei Raupenlaufwerke aufweisendes Raupenfahrwerk, welches an einer Achse der Arbeitsmaschine angeordnet ist, wobei jedes Raupenlaufwerk einen Tragrahmen, eine vordere Umlenkrolle und eine hintere Umlenkrolle sowie zumindest eine dazwischenliegende Stützrolle aufweist, die von einem endlos umlaufenden Raupenband umschlossen sind. Jedes Raupenlaufwerk umfasst mehrere Hydraulikzylinder sowie zumindest eine Ventileinheit, mit denen das Fahrverhalten beeinflusst wird, die jeweils mit entlang einer Maschinenstruktur des Mähdreschers angeordneten Leitungen verbunden sind, um diese mit einer Hydraulikpumpe sowie einem Tank und einer Steuereinheit zur Übermittlung von Steuersignalen zu verbinden. Die beiden Raupenlaufwerke sind an der Achse angelenkt, so dass diese um die Achse pendeln können. Neben den Pendel- oder Schwenkbewegungen der Raupenlaufwerke werden Vibrationen auf die Leitungen übertragen, welche zu Verschleißerscheinungen an diesen führen. Ein Austauschen verschlissener Leitungen ist vor allem zeitaufwendig, da die entlang der Maschinenstruktur geführten Leitungen schwer zugänglich sind. Die Verschleißerscheinungen an den Leitungen treten dabei in der Regel im Bereich des jeweiligen Raupenlaufwerks auf. Verschiedene hydraulische Anschlusseinheiten sind z.B. aus den folgenden Dokumenten bekannt WO 2020/194877 A1, JP H10 17274 A und WO 2010/069393 A1.

Ausgehend vom vorstehend genannten Stand der Technik liegt der Erfindung die Aufgabe zugrunde, eine landwirtschaftliche Arbeitsmaschine der eingangs genannten Art weiterzubilden, welche die Nachteile des Standes der Technik vermeidet, insbesondere, dass der Aufwand zum Austauschen verschlissener Leitungen minimiert wird und dass der auftretende Verschleiß örtlich begrenzt wird.

Diese Aufgabe wird gelöst durch eine landwirtschaftliche Arbeitsmaschine mit den Merkmalen des unabhängigen Patentanspruchs 1. Vorteilhafte Ausführungsformen und Weiterbildungen sind den hiervon abhängigen Ansprüchen zu entnehmen.

Gemäß dem Anspruch 1 wird eine landwirtschaftliche Arbeitsmaschine, insbesondere eine selbstfahrende Erntemaschine, vorgeschlagen, umfassend zumindest ein zwei Raupenlaufwerke aufweisendes Raupenfahrwerk, welches an zumindest einer Achse der Arbeitsmaschine angeordnet ist, wobei jedes Raupenlaufwerk einen Tragrahmen, eine vordere Umlenkrolle und eine hintere Umlenkrolle sowie zumindest eine dazwischenliegende Stützrolle aufweist, die von einem endlos umlaufenden Raupenband umschlossen sind, wobei jedes Raupenlaufwerk zumindest einen Hydraulikzylinder sowie zumindest eine Ventileinheit umfasst, die jeweils mit entlang einer Maschinenstruktur der Arbeitsmaschine verlaufend angeordneten Leitungen verbunden sind. Erfindungsgemäß ist vorgesehen, an dem jeweiligen Tragrahmen eine Anschlusseinheit mit Anschlüssen angeordnet ist, an welchen Verbindungsleitungen angeschlossen sind, welche die zu dem jeweiligen Raupenlaufwerk führenden Leitungen mit dem zumindest einen Hydraulikzylinder sowie der zumindest einen Ventileinheit verbinden. Die an dem jeweiligen Tragrahmen eines Raupenlaufwerkes vorgesehene Anordnung einer Anschlusseinheit stellt einen zentralisierten Anschluss der zu dem jeweiligen Raupenlaufwerk führenden Leitungen dar. Die jeweilige Anschlusseinheit ist der Achse der Arbeitsmaschine zugewandt an dem Tragahmen, insbesondere lösbar, angeordnet. Der Bereich zwischen dem jeweiligen Raupenlaufwerk und der Arbeitsmaschine ist leichter zugänglich, als Bereiche innerhalb des Raupenlaufwerks oder entlang und/oder innerhalb der Maschinenstruktur der Arbeitsmaschine. Durch die Verwendung von Verbindungsleitungen, die den Bereich zwischen dem jeweiligen Raupenlaufwerk und der Achse der Arbeitsmaschine überbrücken wird erreicht, dass auftretender Verschleiß sich im Wesentlichen auf die Verbindungsleitungen beschränkt, was einen Austausch erheblich vereinfacht. Zur Maschinenstruktur der Arbeitsmaschine zählt dabei zumindest die Achse, von der ausgehend die Leitungen zu dem jeweiligen Raupenlaufwerk führen. Insbesondere kann die Ventileinheit hydraulisch und/oder elektrisch angesteuert sein.

Bevorzugt können an der Achse der Arbeitsmaschine beidseitig mit korrespondierenden Anschlüssen ausgebildete Anschlusseinheiten vorgesehen sein, wobei die Anschlusseinheit des jeweiligen Raupenlaufwerks mit der zugehörigen Anschlusseinheit an der Achse durch die Verbindungsleitungen verbunden ist. Das Vorsehen einer zugehörigen Anschlusseinheit an der Achse hat den Vorteil, dass auch die von der Maschine kommenden Leitungen in einem zentralen Anbindungspunkt zusammengeführt sind.

Besonders vorteilhaft ist es, wenn die Verbindungsleitungen als flexible Leitungen ausgeführt sind. Flexible Verbindungsleitungen sind weniger anfällig für Vibrationen. Insbesondere kann durch die flexible Ausgestaltung der Verbindungsleitungen ein Übertragen von Schwingungen auf die von der Maschine kommenden Leitungen vermieden werden. Dies ist besonders vorteilhaft, wenn die Leitungen maschinenseitig fixiert sind, beispielsweise durch Halterungen, Kabelschellen oder dergleichen. Die Länge der Verbindungsleitungen ist dabei so gewählt, dass etwaige Bewegungen des Raupenlaufwerks während der Fahrt, beispielsweise eine Pendelbewegung um die Achse, kompensiert werden, ohne dass dies zu einem Überdehnen der Verbindungsleitungen führt.

Insbesondere kann die jeweilige Anschlusseinheit eine Verbindungsseite und eine der Verbindungsseite gegenüberliegende Anschlussseite aufweisen. Insbesondere ist die Anschlusseinheit hierzu als ein zumindest abschnittsweise plattenförmiges Bauteil ausgeführt. Die Verbindungsseite der an dem jeweiligen Raupenlaufwerk angeordneten Anschlusseinheit ist der Achse der Arbeitsmaschine zugewandt. Die der Verbindungsseite gegenüberliegende Anschlussseite der Anschlusseinheit ist der Arbeitsmaschine abgewandt. Auf der Verbindungsseite der Anschlusseinheit sind die Verbindungsleitungen angeschlossen, welche das jeweilige Raupenlaufwerk mit den von der Arbeitsmaschine kommenden Leitungen verbinden. Auf der Anschlussseite sind die Leitungen innerhalb des jeweiligen Raupenlaufwerks an die Anschlusseinheit angeschlossen, welche den zumindest einen Hydraulikzylinder sowie die zumindest eine elektrisch und/oder hydraulisch angesteuerte Ventileinheit mit der Anschlusseinheit verbinden. Die auf der Verbindungsseite angeschlossen Verbindungsleitungen überbrücken die Distanz zwischen Achse und Raupenlaufwerk.

Vorzugsweise kann sich die jeweilige am Tragrahmen angeordnete Anschlusseinheit abschnittsweise in Längsrichtung des Raupenlaufwerks erstrecken. Insbesondere kann die am Tragrahmen angeordnete Anschlusseinheit als ein profiliertes Blechbauteil ausgeführt sein. Die Anschlusseinheit kann an einem am Tragrahmen angeordneten Dachblech lösbar befestigt sein. Das Dachblech ist vorzugsweise oberhalb des zumindest einen Stützrades an dem Tragrahmen befestigt und erstreckt sich im Wesentlichen parallel zur Aufstandsfläche des Raupenbandes. Die Anschlusseinheit kann somit unterhalb des Dachbleches an diesem angeordnet sein, wodurch eine teilweise Abschirmung der Anschlusseinheit und ihrer Anschlüsse erreicht wird.

Weiterhin können von der Anschlussseite der Anschlusseinheit ausgehend starre Leitungen innerhalb des jeweiligen Raupenlaufwerks verlegt sein. So können anstelle druckfester flexibler Hydraulikleitungen starre Rohrleitungen innerhalb des Raupenlaufwerks verlegt sein, welche die Anschlusseinheit mit dem zumindest einen Hydraulikzylinder verbinden.

Gemäß einer bevorzugten Weiterbildung können die Verbindungsleitungen mittels Schottverschraubungen oder mittels Schnellkupplern als Verbindungsmittel mit der jeweiligen Anschlusseinheit lösbar verbunden sein. Insbesondere die Verbindung mittels Schnellkupplern hat den Vorteil, dass der zeitliche Aufwand bei einem Austausch einzelner Verbindungsleitungen reduziert werden kann.

Zum Schutz der Verbindungsleitungen vor Witterungseinflüssen und Verschmutzung kann an einer der Verbindungsleitungen ein Wickelschlauch befestigt sein. Der Wickelschlauch kann die weiteren Verbindungsleitungen zumindest abschnittsweise umschließen.

Weiterhin kann die jeweilige Anschlusseinheit einen sich parallel zum Raupenband erstreckenden flächigen Abschnitt aufweisen, der auf der Verbindungsseite der Anschlusseinheit befindliche Anschlüsse zumindest teilweise abdeckt. Diese Ausführung ist vorteilhaft, wenn die Anschlusseinheit unmittelbar an dem Tragrahmen des Raupenlaufwerks, d.h. unter Verzicht auf das Dachblech, befestigt ist.

Alternativ kann die jeweilige Anschlusseinheit einen gegenüber dem Raupenband unter einem Winkel geneigten flächigen Abschnitt aufweisen, der auf der Verbindungsseite der Anschlusseinheit befindliche Anschlüsse zumindest teilweise abdeckt.

Insbesondere können die Anschlüsse der jeweiligen Anschlusseinheit zur Verbindung mit als Hydraulikleitungen, elektrischen Leitungen sowie Schmiermittelleitungen ausgeführten Leitungen der Arbeitsmaschine ausgebildet sein.

Dabei können die Anschlüsse der Anschlusseinheiten und/oder die Verbindungsleitungen entsprechend ihrer Funktion als Hydraulikleitungen, elektrische Leitungen sowie Schmiermittelleitungen individuell gekennzeichnet oder ausgebildet sein. Insbesondere die Anschlüsse auf der Anschlussseite der Anschlusseinheiten sollten individuell gekennzeichnet oder ausgebildet sein, um beispielsweise ein irrtümliches Verwechseln von Druckleitung und Tankleitung beim Anschließen der Verbindungsleitungen zu vermeiden. So können als individuelle Kennzeichnungen unterschiedliche Farben und/oder Anschlussgeometrien verwendet werden.

Gemäß einem weiteren Aspekt der Erfindung können zwischen der Achse und dem jeweiligen Raupenlaufwerk Abstandshalter angeordnet sein, welche der Einstellung eines einzuhaltenden Abstands in Abhängigkeit von der Breite der Raupenbänder dienen. Somit können innerhalb des Raupenlaufwerks Gleichteile für die Leitungen verwendet werden, unabhängig von der Breite der Raupenbänder. Der durch den Abstandshalter vorgegebene Abstand zwischen dem Raupenlaufwerk und der Achse lässt sich durch die flexiblen Verbindungsleitungen einfacher überbrücken.

So können bis zu den Anschlusseinheiten sowohl auf der Raupenseite als auch der Maschinenseite jeweils starre Leitungen verlegt und auf den Anschlussseiten angeschlossen werden. Die erforderliche Überbrückung des Abstands zwischen den Anschlüssen der einander gegenüberliegenden Anschlusseinheiten wird durch die in ihrer Länge einfach anpassbaren Verbindungsleitungen erreicht. Dadurch wird auch der Aufwand bei der Montage und der Verlegung der Leitungen gegenüber dem Stand der Technik reduziert.

Eine bevorzugte Weiterbildung sieht vor, dass die Achse als Vorderachse der Arbeitsmaschine ausgeführt ist, an welcher zwei Hydraulikzylinder zwischen jeweils sich paarweise in Längsrichtung erstreckenden Befestigungsabschnitten angelenkt sind, wobei die jeweiligen Anschlusseinheiten an der Arbeitsmaschine in den jeweiligen dem Raupenlaufwerk zugewandten Befestigungsabschnitt an der Achse integriert sind.

Die vorliegende Erfindung wird nachstehend anhand eines in den Zeichnungen dargestellten Ausführungsbeispieles näher erläutert.

Es zeigen:
- Fig. 1: eine schematische Seitenansicht einer landwirtschaftlichen Arbeitsmaschine;
- Fig. 2: schematisch eine perspektivische Teilansicht einer vorderen Achse mit einem daran angeordneten Raupenlaufwerk;
- Fig. 3: schematisch eine weitere perspektivische Teilansicht der vorderen Achse mit dem daran angeordneten Raupenlaufwerk;
- Fig. 4: schematisch eine Ansicht von schräg oben auf das Raupenlaufwerk gemäß Fig. 3 ohne Raupenband; und
- Fig. 5: schematisch eine vereinfachte Teilansicht des Bereiches zwischen der vorderen Achse und einem der Raupenlaufwerke.

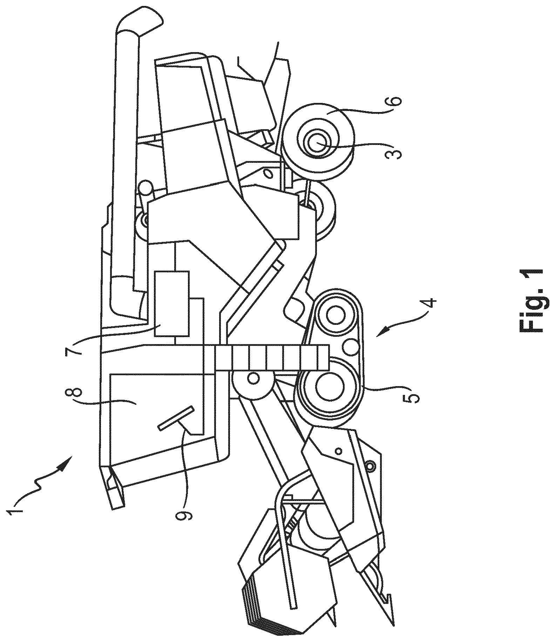

Die vorliegende Erfindung betrifft eine landwirtschaftliche Arbeitsmaschine 1 welche insbesondere als eine selbstfahrende Erntemaschine, beispielsweise als ein Mähdrescher, wie in Fig. 1 dargestellt, oder ein Feldhäcksler, ausgeführt ist. Die landwirtschaftliche Arbeitsmaschine 1 gemäß der dargestellten Ausführungsform ist als sogenannte Halbraupe ausgebildet und weist eine vordere Achse 2, die durch ein Raupenlaufwerk 5 verdeckt ist, sowie eine hintere lenkbare Achse 3 auf. An der vorderen Achse 2 ist ein Raupenfahrwerk 4 angeordnet. Das Raupenfahrwerk 4 umfasst beidseitig an der vorderen Achse 2 angeordnete Raupenlaufwerke 5. An der lenkbaren hinteren Achse 3 sind Räder 6 angeordnet. Eine nicht dargestellte alternative Ausgestaltung sieht vor, dass sowohl an der vorderen Achse 2 als auch an der hinteren Achse 3 unterschiedlich ausgeführte Raupenfahrwerke 4 angeordnet sind. Weiterhin umfasst die landwirtschaftliche Arbeitsmaschine 1 eine Steuerungsvorrichtung 7. In einer Kabine 8 der Arbeitsmaschine 1 ist ein Lenkrad 9 angeordnet, dessen Lenkbewegungen von der Steuerungsvorrichtung 7 erfasst und ausgewertet werden können, um das zumindest eine Raupenfahrwerk 4 anzusteuern. So kann bei einer als Feldhäcksler ausgeführten landwirtschaftlichen Arbeitsmaschine 1 eine Lenkbewegung des Raupenlaufwerks zur Schonung des Bodens bei einer Vorgewendefahrt verwendet werden, insbesondere bei der Grasernte.

Das jeweilige Raupenlaufwerk 5 umfasst eine vordere Umlenkrolle 10 sowie eine hintere Umlenkrolle 11. Zwischen der vorderen Umlenkrolle 10 und der hinteren Umlenkrolle 11 ist zumindest eine Stützrolle 12 angeordnet. Hier und vorzugsweise sind zwei Stützrollen 12 vorgesehen. Die vordere und die hintere Umlenkrolle 10 und 11 sind von einem Raupenband 13 umschlossen. Zwischen der vorderen Umlenkrolle 10 und der hinteren Umlenkrolle 12 erstreckt sich ein, insbesondere mehrteiliger, Tragrahmen 14, der die vordere Umlenkrolle 10 und die hintere Umlenkrolle 11 miteinander verbindet. Die vordere Umlenkrolle 10 und die hintere Umlenkrolle 11 sind jeweils drehbar an dem Tragrahmen 14 gelagert.

Die Raupenlaufwerke 5 sind an beidseitig der vorderen Achse 2 befindlichen Flanschabschnitten 15 angeordnet. Zwischen dem Flanschabschnitt 15 und einem Befestigungsabschnitt am Tragrahmen 14 des Raupenlaufwerkes 5 befindet sich ein Abstandhalter 16 oder Distanzstück. Die Dimensionierung des Abstandhalters 16 ist von der Breite des Raupenbandes 13 abhängig.

Jedes Raupenlaufwerk 5 umfasst zumindest einen Hydraulikzylinder 17 sowie zumindest eine - nicht dargestellte- Ventileinheit, die jeweils mit entlang einer Maschinenstruktur der Arbeitsmaschine 1 verlaufend angeordneten Leitungen 18 verbunden sind. Die Ventileinheit kann elektrisch angesteuert sein. Die vordere Achse 2 bildet einen Teil der Maschinenstruktur, entlang der die Leitungen 18 verlaufen. Die Leitungen 18 sind an und/oder in der vorderen Achse 2 angeordnet. Die entlang der Maschinenstruktur verlaufenden Leitungen 18 werden auch als maschinenseitige Leitungen 18 bezeichnet.

An der vorderen Achse 2, die insbesondere als Triebachse der Arbeitsmaschine 1 ausgeführt sein kann, sind zwei - nicht dargestellte - Hydraulikzylinder zwischen jeweils zwei zueinander parallelen und sich in Längsrichtung der Arbeitsmaschine 1 erstreckenden, im Wesentlichen plattenförmigen Befestigungsabschnitt 19 angelenkt. An dem dem Raupenlaufwerk 5 zugewandten äußeren Befestigungsabschnitt 19 kann jeweils eine Anschlusseinheit 20 mit mehreren Anschlüssen 21 angeordnet sein. Die an beiden Enden der vorderen Achse 2 angeordneten Anschlusseinheiten 20 sind mittels Schraubverbindungen 22 lösbar an dem äußeren Befestigungsabschnitt 19 befestigt.

Alternativ können die jeweiligen maschinenseitigen Anschlusseinheiten 20 an der Arbeitsmaschine 1 in den jeweiligen dem Raupenlaufwerk 5 zugewandten Befestigungsabschnitt 19 an der vorderen Achse 2 integriert sein.

An dem jeweiligen Tragrahmen 14 des Raupenlaufwerkes 5 ist eine Anschlusseinheit 23 mit mehreren Anschlüssen 24 lösbar angeordnet. An den Anschlüssen 24 der Anschlusseinheit 23 sind Verbindungsleitungen 25 angeschlossen sind, welche die zu dem jeweiligen Raupenlaufwerk 5 führenden maschinenseitigen Leitungen 18 mit dem zumindest einen Hydraulikzylinder 17 sowie der zumindest einen elektrisch angesteuerten Ventileinheit des jeweiligen Raupenlaufwerkes 5 verbinden. Die Verbindungsleitungen 25 sind hier und vorzugsweise als flexible Leitungen ausgeführt.

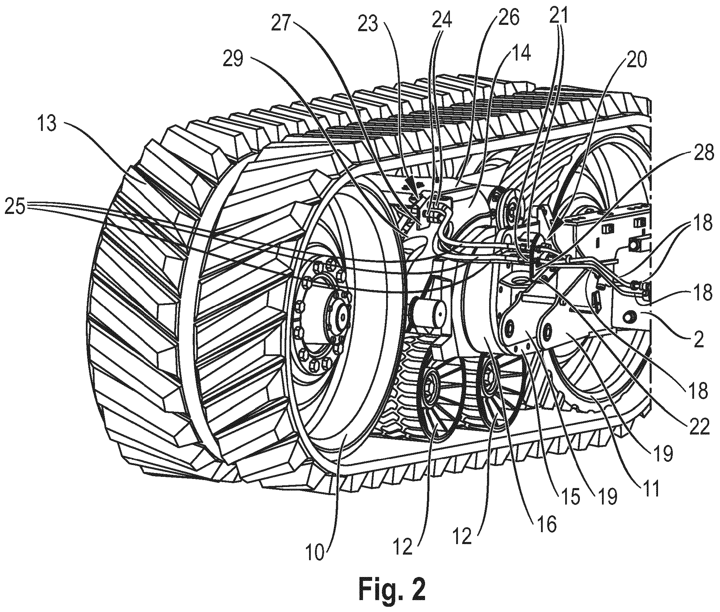

Die Anschlusseinheit 23 ist gemäß dem in Fig. 2 gezeigten Ausführungsbeispiel an einem sogenannten Dachblech 26 lösbar befestigt. Das Dachblech 26 ist an dem Tragrahmen 14 befestigt und erstreckt sich abschnittsweise in Längsrichtung des Raupenbandes 13 sowie quer hierzu. Die Anschlusseinheit 23 kann auch unmittelbar an dem Tragrahmen 14 befestigt sein.

Die maschinenseitigen Anschlusseinheiten 20 und die raupenseitigen Anschlusseinheiten 23 sind hier und vorzugsweise jeweils als Gleichteile ausgeführt. Die Anschlusseinheiten 20 und 23 sind zumindest bezogen auf die Anschlussmöglichkeiten identisch ausgeführt und weisen eine übereinstimmende Anzahl an Anschlüssen 21 bzw. 24 auf. Die jeweilige Anschlusseinheit 20, 23 weist eine Verbindungsseite 27 und eine der Verbindungsseite 27 gegenüberliegende Anschlussseite 28 auf. Die Verbindungsseite 27 der an dem jeweiligen Raupenlaufwerk 5 angeordneten Anschlusseinheit 23 ist der vorderen Achse 2 der Arbeitsmaschine 1 zugewandt. Die der Verbindungsseite 27 gegenüberliegende Anschlussseite 28 der Anschlusseinheit 23 ist der Arbeitsmaschine 1 abgewandt. Die Anschlusseinheit 20 an der vorderen Achse 2 ist zur gegenüberliegenden Anschlusseinheit 23 spiegelbildlich angeordnet, so dass die Verbindungsseite 27 der Anschlusseinheit 20 der Arbeitsmaschine 1 abgewandt und die Anschlussseite 28 der vorderen Achse 2 zugewandt ist. Auf der jeweiligen Verbindungsseite 27 sind die Verbindungsleitungen 25 an die Anschlusseinheiten 20, 23 angeschlossen. Auf der Anschlussseite 28 der Anschlusseinheit 23 sind die innerhalb des jeweiligen Raupenlaufwerks 5 verlaufenden Leitungen 29 an die Anschlusseinheit 23 angeschlossen, welche den zumindest einen Hydraulikzylinder 17 sowie die zumindest eine elektrisch angesteuerte Ventileinheit mit der Anschlusseinheit 23 verbinden. Auf der jeweiligen Verbindungsseite 27 sind die Verbindungsleitungen 25 angeschlossen, welche das jeweilige Raupenlaufwerk 5 mit den von der Arbeitsmaschine 1 kommenden maschinenseitigen Leitungen 18 verbinden.

Die von der Anschlussseite 28 der Anschlusseinheit 23 ausgehenden, innerhalb des jeweiligen Raupenlaufwerks 5 verlegten Leitungen 29 sind vorzugsweise als starre Leitungen ausgeführt.

Die Verbindungsleitungen 25 können mittels Schottverschraubungen oder mittels Schnellkupplern als Verbindungsmittel 31 mit der Verbindungsseite 27 der jeweiligen Anschlusseinheit 20, 23 lösbar verbunden sein. Zum Schutz der Verbindungsleitungen 25 kann an einer der Verbindungsleitungen 25 ein - nicht dargestellter - Wickelschlauch befestigt sein, welcher diese Verbindungsleitung 25 sowie die weiteren Verbindungsleitungen 25 zum Schutz vor äußeren Einflüssen umschließt.

Die maschinenseitigen Leitungen 18 bzw. die raupenseitigen Leitungen 29 und die diese miteinander verbindenden Verbindungsleitungen 25 zwischen den Anschlusseinheiten 20, 23 sind in Abhängigkeit von ihrer Funktion als Hydraulikleitungen, Schmiermittelleitung oder elektrische Leitungen, insbesondere Steuerleitungen, ausgeführt.

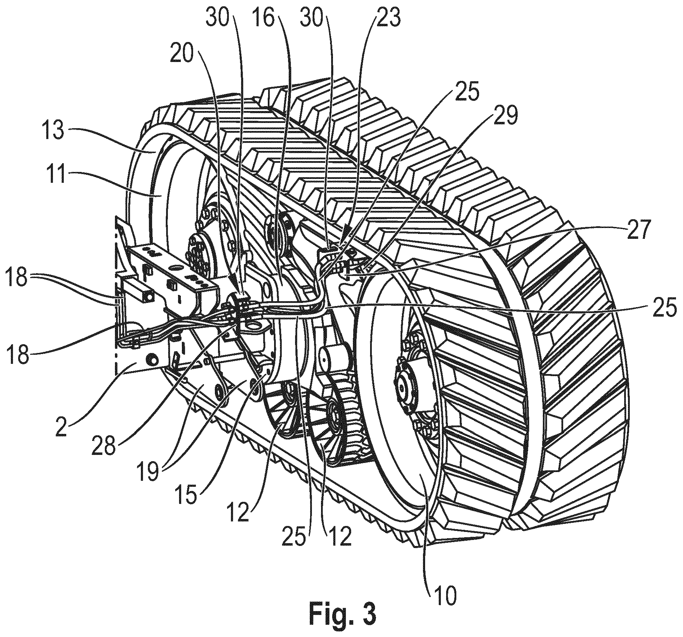

Die jeweilige Anschlusseinheit 20, 23 kann einen sich parallel zum Raupenband 13 erstreckenden flächigen Abschnitt 30 aufweisen, der auf der Anschlussseite 28 der jeweiligen Anschlusseinheit 20, 23 befindliche Anschlüsse 24 zumindest teilweise abdeckt, wie in Fig. 3 dargestellt.

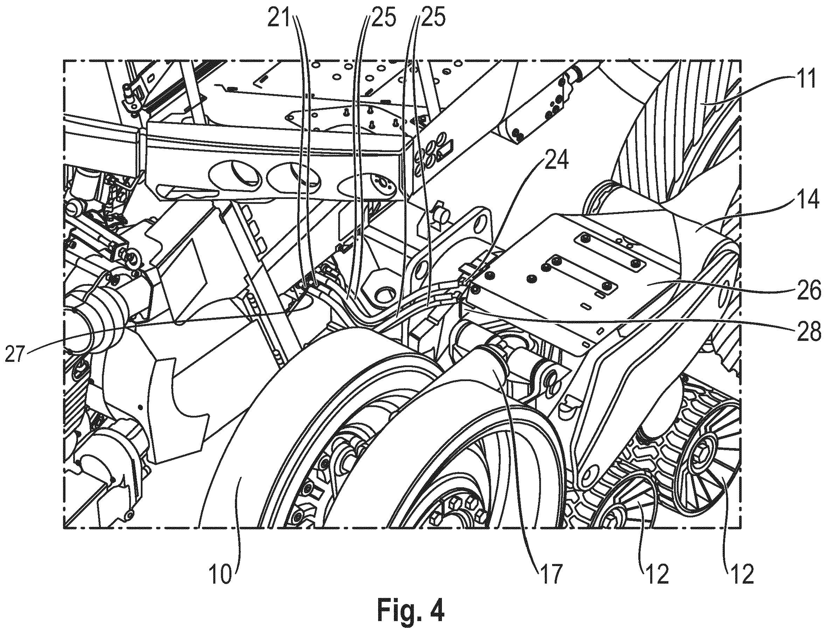

Die Darstellung in Fig. 4 zeigt schematisch eine Ansicht von schräg oben auf das Raupenlaufwerk 5 gemäß Fig. 3 ohne das die Umlenkräder 10, 11 umschließende Raupenband 13.

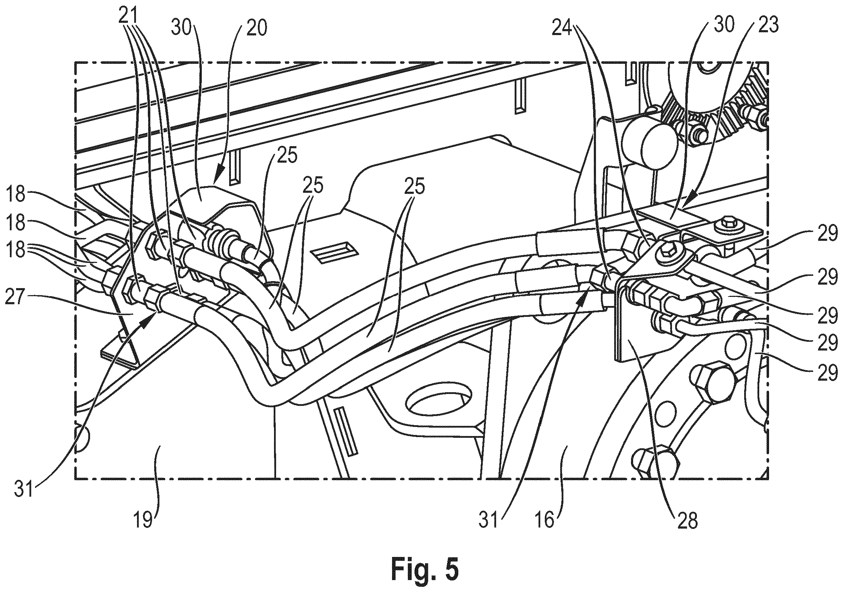

In Fig. 5 ist schematisch eine vereinfachte Teilansicht des Bereiches zwischen der Achse 2 und einem der Raupenlaufwerke 5 dargestellt, wobei einzelne Komponenten des Raupenlaufwerkes 5 zur besseren Veranschaulichung nicht dargestellt sind. Der Bereich zwischen der Achse 2 und einem der Raupenlaufwerke 5 wird durch die flexiblen Verbindungsleitungen 25 überbrückt. Die an dem jeweiligen Tragrahmen 14 des Raupenlaufwerkes 5 vorgesehene Anordnung der Anschlusseinheiten 23 stellt einen zentralisierten Anschluss der zu dem jeweiligen Raupenlaufwerk 5 führenden Leitungen 18 dar. Der Bereich zwischen dem Raupenlaufwerk 5 und der Arbeitsmaschine 1 ist leichter zugänglich als Bereiche innerhalb des Raupenlaufwerks 5 oder entlang und/oder innerhalb der Maschinenstruktur, insbesondere der Achse 2, der Arbeitsmaschine 1. Durch die Verwendung von flexiblen Verbindungsleitungen 25, die den Bereich zwischen dem jeweiligen Raupenlaufwerk 5 und der Achse 2 überbrücken wird erreicht, dass auftretender Verschleiß sich im Wesentlichen auf die Verbindungsleitungen 25 beschränkt, was einen gegebenenfalls erforderlich werdenden Austausch erheblich vereinfacht.

### Bezugszeichenliste

- 1: Arbeitsmaschine
- 2: Vordere Achse
- 3: Hintere Achse
- 4: Raupenfahrwerk
- 5: Raupenlaufwerk
- 6: Rad
- 7: Steuerungsvorrichtung
- 8: Kabine
- 9: Lenkrad
- 10: Umlenkrolle
- 11: Umlenkrolle
- 12: Stützrolle
- 13: Raupenband
- 14: Tragrahmen
- 15: Flanschabschnitt
- 16: Abstandhalter
- 17: Hydraulikzylinder
- 18: Leitung
- 19: Befestigungsabschnitt
- 20: Anschlusseinheit
- 21: Anschluss
- 22: Schraubverbindungen
- 23: Anschlusseinheit
- 24: Anschluss
- 25: Verbindungsleitung
- 26: Dachblech
- 27: Verbindungsseite
- 28: Anschlussseite
- 29: Leitung
- 30: Abschnitt
- 31: Verbindungsmittel

## Patentansprüche

1. Landwirtschaftliche Arbeitsmaschine (1), insbesondere selbstfahrende Erntemaschine, umfassend zumindest ein zwei Raupenlaufwerke (5) aufweisendes Raupenfahrwerk (4), welches an zumindest einer Achse (2) der Arbeitsmaschine (1) angeordnet ist, wobei jedes Raupenlaufwerk (5) einen Tragrahmen (14), eine vordere Umlenkrolle (10) und eine hintere Umlenkrolle (11) sowie zumindest eine dazwischenliegende Stützrolle (12) aufweist, die von einem endlos umlaufenden Raupenband (13) umschlossen sind, wobei jedes Raupenlaufwerk (5) zumindest einen Hydraulikzylinder (17) sowie zumindest eine Ventileinheit umfasst, die jeweils mit entlang einer Maschinenstruktur der Arbeitsmaschine (1) verlaufend angeordneten Leitungen (18) verbunden sind, **dadurch gekennzeichnet, dass** an dem jeweiligen Tragrahmen (14) eine Anschlusseinheit (23) mit Anschlüssen (24) angeordnet ist, an welchen Verbindungsleitungen (25) angeschlossen sind, welche die zu dem jeweiligen Raupenlaufwerk (5) führenden Leitungen (18) mit dem zumindest einen Hydraulikzylinder (17) sowie der zumindest einen Ventileinheit verbinden.

2. Landwirtschaftliche Arbeitsmaschine (1) nach Anspruch 1, **dadurch gekennzeichnet, dass** an der Achse (2) der Arbeitsmaschine (1) beidseitig mit korrespondierenden Anschlüssen (21) ausgebildete Anschlusseinheiten (20) vorgesehen sind, wobei die Anschlusseinheit (23) des jeweiligen Raupenlaufwerks (5) mit der Anschlusseinheit (20) an der Achse (2) durch die Verbindungsleitungen (25) verbunden ist.

3. Landwirtschaftliche Arbeitsmaschine (1) nach Anspruch 1 oder 2, **dadurch gekennzeichnet, dass** die Verbindungsleitungen (25) als flexible Leitungen ausgeführt sind.

4. Landwirtschaftliche Arbeitsmaschine (1) nach einem der Ansprüche 1 bis 3, **dadurch gekennzeichnet, dass** die jeweilige Anschlusseinheit (20, 23) eine Verbindungsseite (27) und eine der Verbindungsseite (27) gegenüberliegende Anschlussseite (28) aufweist.

5. Landwirtschaftliche Arbeitsmaschine (1) nach einem der Ansprüche 1 bis 4, **dadurch gekennzeichnet, dass** sich die jeweilige am Tragrahmen (14) angeordnete Anschlusseinheit (23) abschnittsweise in Längsrichtung des Raupenlaufwerks (5) erstreckt.

6. Landwirtschaftliche Arbeitsmaschine (1) nach Anspruch 5, **dadurch gekennzeichnet, dass** von der Anschlussseite (28) der Anschlusseinheit (23) ausgehend starre Leitungen (29) innerhalb des jeweiligen Raupenlaufwerks (5) verlegt sind.

7. Landwirtschaftliche Arbeitsmaschine (1) nach einem der vorhergehenden Ansprüche, **dadurch gekennzeichnet, dass** die Verbindungsleitungen (25) mittels Schottverschraubungen oder mittels Schnellkupplern als Verbindungsmittel (31) mit der jeweiligen Anschlusseinheit (20, 23) lösbar verbunden sind.

8. Landwirtschaftliche Arbeitsmaschine (1) nach einem der vorhergehenden Ansprüche, **dadurch gekennzeichnet, dass** an einer der Verbindungsleitungen (25) ein Wickelschlauch befestigt ist.

9. Landwirtschaftliche Arbeitsmaschine (1) nach einem der Ansprüche 4 bis 8, **dadurch gekennzeichnet, dass** die jeweilige Anschlusseinheit (20, 23) einen sich parallel zum Raupenband (13) erstreckenden flächigen Abschnitt (30) aufweist, der auf der Verbindungsseite (28) der Anschlusseinheit (20, 23) befindliche Anschlüsse (21, 24) zumindest teilweise abdeckt.

10. Landwirtschaftliche Arbeitsmaschine (1) nach einem der Ansprüche 4 bis 8, **dadurch gekennzeichnet, dass** die jeweilige Anschlusseinheit (20, 23) einen gegenüber dem Raupenband (13) unter einem Winkel geneigten flächigen Abschnitt (30) aufweist, der auf der Verbindungsseite (27) der Anschlusseinheit (20, 23) befindliche Anschlüsse (21, 24) zumindest teilweise abdeckt.

11. Landwirtschaftliche Arbeitsmaschine (1) nach einem der vorhergehenden Ansprüche, **dadurch gekennzeichnet, dass** die Anschlüsse (21, 24) der jeweiligen Anschlusseinheit (20, 23) zur Verbindung mit den als Hydraulikleitungen, elektrischen Leitungen sowie Schmiermittelleitungen ausgeführten Leitungen (18) der Arbeitsmaschine (1) ausgebildet sind.

12. Landwirtschaftliche Arbeitsmaschine (1) nach Anspruch 11, **dadurch gekennzeichnet, dass** die Anschlüsse (21, 24, 29) der Anschlusseinheiten (20, 23) und/oder die Verbindungsleitungen (25) entsprechend ihrer Funktion als Hydraulikleitungen, elektrische Leitungen sowie Schmiermittelleitungen individuell gekennzeichnet sind.

13. Landwirtschaftliche Arbeitsmaschine (1) nach einem der vorhergehenden Ansprüche, **dadurch gekennzeichnet, dass** zwischen der Achse (2) und dem jeweiligen Raupenlaufwerk (5) Abstandshalter (16) angeordnet sind, welche der Einstellung eines einzuhaltenden Abstands in Abhängigkeit von der Breite der Raupenbänder (13) dienen.

14. Landwirtschaftliche Arbeitsmaschine (1) nach einem der vorhergehenden Ansprüche, **dadurch gekennzeichnet, dass** die Achse (2) als Vorderachse der Arbeitsmaschine (1) ausgeführt ist, an welcher zwei Hydraulikzylinder zwischen jeweils sich paarweise in Längsrichtung erstreckenden Befestigungsabschnitten (19) angelenkt sind, wobei die jeweiligen Anschlusseinheiten (20) an der Arbeitsmaschine (1) in den jeweiligen dem Raupenlaufwerk (5) zugewandten Befestigungsabschnitt (19) an der Achse (2) integriert sind.

## Claims

1. An agricultural working machine (1), in particular a self-propelled harvesting machine, comprising at least one crawler chassis (4) which is disposed on at least one axle (2) of the working machine (1) and which has two crawler track units (5), wherein each crawler track unit (5) has a support frame (14), a front guide roller (10) and a rear guide roller (11) as well as at least one support roller (12) therebetween, which are surrounded by a continuously revolving crawler belt (13), wherein each crawler track unit (5) comprises at least one hydraulic cylinder (17) as well as at least one valve unit which are respectively coupled to lines (18) disposed to run along a machine structure of the working machine (1), **characterized in that** a connection unit (23) with connectors (24) is disposed on the respective support frame (14), to which coupling lines (25) are connected which couple the lines (18) leading to the respective crawler track unit (5) to the at least one hydraulic cylinder (17) as well as with the at least one valve unit.

2. The agricultural working machine (1) according to claim 1, **characterized in that** connection units (20) constructed with corresponding connectors (21) are provided on the axle (2) of the working machine (1) on both sides, wherein the connection unit (23) of the respective crawler track unit (5) is coupled to the connection unit (20) on the axle (2) via the coupling lines (25).

3. The agricultural working machine (1) according to claim 1 or claim 2, **characterized in that** the coupling lines (25) are configured as flexible lines.

4. The agricultural working machine (1) according to one of claims 1 to 3, **characterized in that** the respective connection unit (20, 23) has a coupling side (27) and a connection side (28) lying opposite to the coupling side (27).

5. The agricultural working machine (1) according to one of claims 1 to 4, **characterized in that** the respective connection unit (23) disposed on the support frame (14) extends in sections in the longitudinal direction of the crawler track unit (5).

6. The agricultural working machine (1) according to claim 5, **characterized in that** rigid lines (29) are laid inside the respective crawler track unit (5) from the connection side (28) of the connection unit (23).

7. The agricultural working machine (1) according to one of the preceding claims, **characterized in that** the coupling lines (25) are detachably coupled to the respective connection unit (20, 23) by means of bulkhead fittings or by means of quick-release couplings as coupling means (31).

8. The agricultural working machine (1) according to one of the preceding claims, **characterized in that** a stripwound hose is fastened to one of the coupling lines (25).

9. The agricultural working machine (1) according to one of claims 4 to 8, **characterized in that** the respective connection unit (20, 23) has a laminar section (30) which extends parallel to the crawler belt (13) which at least partially covers connectors (21, 24) located on the coupling side (28) of the connection unit (20, 23).

10. The agricultural working machine (1) according to one of claims 4 to 8, **characterized in that** the respective connection unit (20, 23) has a laminar section (30) which is inclined at an angle with respect to the crawler belt (13), which at least partially covers connectors (21, 24) located on the coupling side (27) of the connection unit (20, 23).

11. The agricultural working machine (1) according to one of the preceding claims, **characterized in that** the connectors (21, 24) of the respective connection unit (20, 23) are configured for coupling to the lines (18) of the working machine (1) constructed as hydraulic lines, electrical lines as well as lubricant lines.

12. The agricultural working machine (1) according to claim 11, **characterized in that** the connectors (21, 24, 29) of the connection units (20, 23) and/or the coupling lines (25) are individually distinguished in accordance with their function as hydraulic lines, electrical lines as well as lubricant lines.

13. The agricultural working machine (1) according to one of the preceding claims, **characterized in that** spacers (16) are disposed between the axle (2) and the respective crawler track unit (5,) which serve to set a separation as a function of the width of the crawler belts (13) which is to be maintained.

14. The agricultural working machine (1) according to one of the preceding claims, **characterized in that** the axle (2) is configured as the front axle of the working machine (1), on which two hydraulic cylinders are articulated respectively between pairs of fastening sections (19) extending in the longitudinal direction, whereby the respective connection units (20) on the working machine (1) are integrated into the respective fastening section (19) on the axle (2) facing the crawler track unit (5).

## Revendications

1. Machine agricole (1), notamment machine de récolte automotrice, comprenant au moins un train de roulement à chenilles (4) qui présente deux dispositifs à chenille (5) et qui est installé sur au moins un essieu (2) de la machine (1), chaque dispositif à chenille (5) présentant un châssis de support (14), une poulie de renvoi avant (10) et une poulie de renvoi arrière (11) ainsi qu'au moins une poulie d'appui (12) intermédiaire, qui sont entourées d'une bande de chenille (13) à circulation sans fin, chaque dispositif à chenille (5) comportant au moins un vérin hydraulique (17) et au moins une unité de vanne, qui sont respectivement reliés à des conduites (18) disposées de manière à s'étendre le long d'une structure de machine de la machine (1), **caractérisée en ce qu'**il est prévu sur le châssis de support (14) respectif, une unité de raccordement (23) dotée de raccords (24) auxquels sont raccordées des conduites de liaison (25) qui relient les conduites (18), menant au dispositif à chenille (5) respectif, au vérin hydraulique (17), au nombre d'au moins un, ainsi qu'à l'unité de vanne, au nombre d'au moins une.

2. Machine agricole (1) selon la revendication 1, **caractérisée en ce qu'**il est prévu sur l'essieu (2) de la machine (1), des unités de raccordement (20) réalisées de part et d'autre, comportant des raccords (21) correspondants, l'unité de raccordement (23) du dispositif à chenille (5) respectif étant reliée à l'unité de raccordement (20) sur l'essieu (2) par l'intermédiaire des conduites de liaison (25).

3. Machine agricole (1) selon la revendication 1 ou 2, **caractérisée en ce que** les conduites de liaison (25) sont réalisées sous forme de conduites souples.

4. Machine agricole (1) selon une des revendications 1 à 3, **caractérisée en ce que** l'unité de raccordement (20, 23) respective présente un côté de liaison (27) et un côté de raccordement (28) opposé au côté de liaison (27).

5. Machine agricole (1) selon une des revendications 1 à 4, **caractérisée en ce que** l'unité de raccordement (23) respective, disposée sur le châssis de support (14), s'étend par portions dans le sens longitudinal du dispositif à chenille (5).

6. Machine agricole (1) selon la revendication 5, **caractérisée en ce que**, partant du côté raccordement (28) de l'unité de raccordement (23), des conduites (29) rigides sont installées à l'intérieur du dispositif à chenille (5) respectif.

7. Machine agricole (1) selon une des revendications précédentes, **caractérisée en ce que** les conduites de liaison (25) sont reliées de façon amovible à l'unité de raccordement (20, 23) respective à l'aide de vissages passe-cloison ou à l'aide de raccords rapides en tant que moyens de liaison (31).

8. Machine agricole (1) selon une des revendications précédentes, **caractérisée en ce qu'**un tuyau flexible à ondes hélicoïdales est fixé à l'une des conduites de liaison (25).

9. Machine agricole (1) selon une des revendications 4 à 8, **caractérisée en ce que** l'unité de raccordement (20, 23) respective présente une portion (30) plate qui s'étend parallèlement à la bande de chenille (13) et recouvre au moins en partie des raccords (21, 24) situés sur le côté liaison (28) de l'unité de raccordement (20, 23).

10. Machine agricole (1) selon une des revendications 4 à 8, **caractérisée en ce que** l'unité de raccordement (20, 23) respective présente une portion (30) plate qui est inclinée en formant un angle par rapport à la bande de chenille (13) et recouvre au moins en partie des raccords (21, 24) situés sur le côté liaison (27) de l'unité de raccordement (20, 23).

11. Machine agricole (1) selon une des revendications précédentes, **caractérisée en ce que** les raccords (21, 24) de l'unité de raccordement (20, 23) respective sont conformés en vue de la liaison aux conduites (18) de la machine (1) réalisées sous forme de conduites hydrauliques, de lignes électriques et de conduites à lubrifiant.

12. Machine agricole (1) selon la revendication 11, **caractérisée en ce que** les raccords (21, 24, 29) des unités de raccordement (20, 23) et/ou les conduites de liaison (25) sont marquées individuellement, selon leur fonction, comme conduites hydrauliques, lignes électriques et conduites à lubrifiant.

13. Machine agricole (1) selon une des revendications précédentes, **caractérisée en ce qu'**il est prévu entre l'essieu (2) et le dispositif à chenille (5) respectif, des entretoises (16) qui servent au réglage d'une distance devant être respectée en fonction de la largeur des bandes de chenille (13).

14. Machine agricole (1) selon une des revendications précédentes, **caractérisée en ce que** l'essieu (2) est réalisé comme essieu avant de la machine (1), sur lequel sont articulés deux vérins hydrauliques, entre des parties de fixation (19) s'étendant respectivement par paires dans le sens de la longueur, les unités de raccordement (20) respectives sur la machine (1) étant intégrées dans la partie de fixation (19) respective sur l'essieu (2) qui est tournée vers le dispositif à chenille (5).
